# EUROPEAN PATENT APPLICATION

(11) **EP 3 859 650 A1**
(43) Date of publication of application: **04.08.2021**
(21) Application number: 21153352.6
(22) Date of filing: 25.01.2021
(51) Int. Cl.: G06Q 50/00, G06Q 50/30

(54) **INFORMATION PROCESSING DEVICE, INFORMATION PROCESSING METHOD, AND NON-TRANSITORY STORAGE MEDIUM STORING PROGRAM**

(30) Priority: 28.01.2020 JP 2020011916
(71) Applicant: TOYOTA JIDOSHA KABUSHIKI KAISHA, Toyota-shi, Aichi-ken, 471-8571 (JP)
(72) Inventor: YAMANE, Josuke, Toyota-shi, Aichi-ken, 471-8571 (JP); OKA, Naoya, Toyota-shi, Aichi-ken, 471-8571 (JP); YAMAMOTO, Ryosuke, Nagoya, Aichi, 460-0003 (JP); OKUDA, Kaori, Nagoya, Aichi, 460-0003 (JP)
(74) Representative: Cabinet Beau de Loménie

(57) **Abstract**

An information processing device includes a storage unit configured to store first information, the first information indicating a behavior history of a user during driving of a vehicle (20) in a first period and a control unit configured to perform a driving evaluation of the user based on the first information for the first period and configured to acquire a degree of credence based on a result of the driving evaluation of the user, the degree of credence indicating a degree of credit of the user in a predetermined service.

## Description

### BACKGROUND OF THE INVENTION

### 1. Field of the Invention

The present disclosure relates to an information processing device, an information processing method, and a non-transitory storage medium storing a program.

### 2. Description of Related Art

A technique has been disclosed in which the user's operation of a vehicle is expressed by a virtual emotion generated on the assumption that the vehicle has a personality and, then, this virtual emotion is displayed as an expression of a predetermined character (for example, Japanese Unexamined Patent Application Publication No. 2003-72488 (JP 2003-72488 A)). Another technique has been disclosed in which, while using a service, the manner point is calculated for the manners according to the behavior of a user and, according to the calculated manner point, the quality of the service provided for the user is controlled (for example, Japanese Unexamined Patent Application Publication No. 2015-108854 (JP 2015-108854 A)).

### SUMMARY OF THE INVENTION

The use of a service sometimes depends on the degree of credit of the user. One of such services is a social network service (SNS), customer to customer (C to C) trading, and the like. For example, in C to C trading such as trading on a flea market application, a user with little or no trading result may be determined to be incredible and, in some cases, the user may not be able to participate in trading. However, when a user starts using a service, the user has little or no usage result or personal connection with other users and, therefore, the user tends to be considered incredible.

The present disclosure provides an information processing device capable of acquiring the information indicating the user's degree of credit even when the user has little or no usage result in a service.

A first aspect of the present disclosure relates to an information processing device including a storage unit and a control unit. The storage unit is configured to store first information. The first information indicates a behavior history of a user during driving of a vehicle in a first period. The control unit is configured to perform a driving evaluation of the user based on the first information for the first period and configured to acquire a degree of credence based on a result of the driving evaluation of the user. The degree of credence indicates a degree of credit of the user in a predetermined service.

A second aspect of the present disclosure relates to an information processing method including storing first information in a storage unit, performing a driving evaluation of a user, and acquiring a degree of credence. The first information indicates a behavior history of the user during driving of a vehicle in a first period. The driving evaluation of the user is performed based on the first information for the first period. The degree of credence is acquired based on a result of the driving evaluation of the user. The degree of credence indicates a degree of credit of the user in a predetermined service.

A third aspect of the present disclosure relates to a program. The program causes a computer mounted on a vehicle to acquire first information and to send the first information. The first information is acquired for use in performing a driving evaluation from which a result used to acquire a degree of credence is obtained. The degree of credence indicates a degree of credit of a user who drives the vehicle and who uses a predetermined service. The first information indicates a behavior history of the user during driving of the vehicle. The first information for a predetermined period is sent to a predetermined server.

The present disclosure allows a user to acquire the information indicating the degree of credit of the user even when the user has little or no usage result of a service.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an example of a system configuration of a degree of credence acquisition system according to a first embodiment;
FIG. 2 is a diagram showing an example of a hardware configuration of a center server;
FIG. 3 is a diagram showing an example of a hardware configuration of a vehicle;
FIG. 4 is a diagram showing an example of a functional configuration of the center server and an in-vehicle device;
FIG. 5 is a diagram showing an example of the definition of the number of points used for driving evaluation;
FIG. 6 is an example of a flowchart of degree of credence acquisition processing performed by the center server; and
FIG. 7 is an example of a flowchart of degree of credence acquisition processing according to a modification.

### DETAILED DESCRIPTION OF EMBODIMENTS

It is often said that the driving of a vehicle reflects the character of a driver. For example, a driver who obeys traffic laws while driving tends to be a person who obeys non-traffic laws, rules, and manners in most cases. On the other hand, a driver who frequently does not obey traffic laws tends to be a person who often does not obey non-traffic laws, rules, and manners in many cases. Therefore, it can be said that whether or not driving is gentle indicates, to some extent, whether or not the driver is a credible person. Gentle driving means, for example, driving in which the driver does not break traffic laws, driving in which the driver drives so gently that passengers, pedestrians, and other-vehicle drivers do not feel threatened, and driving in which the driver drives with others in mind.

Driving that the others feel threatened includes, for example, repeated sudden braking and repeated sudden starting, meandering driving, sudden lane change, and horn sounding. Driving with others in mind includes, for example, a behavior to give way to a pedestrian and a behavior to allow another vehicle to merge into traffic.

In trading or in interactions on the Internet, obeying the laws and rules and keeping good manners tend to be considered as important. Therefore, in the present disclosure, a credible person is defined as a person who obeys laws and rules and keeps good manners. The criterion for determining whether or not a person is a credible person is not limited to this definition.

For example, on an SNS, one type of information referred to as an index indicating the degree of credit of a user is the number of users connected to the user on the SNS. A "connection on an SNS" means, for example, the state in which the users are authenticated by each other as acquaintances or as friends and are registered in the friend list. The users connected on an SNS are called, for example, "friends" or "followers". For example, in C to C trading such as a flea market or an auction, the sales results and/or the purchase results and the evaluation from the trading partners are often referred to as an index indicating the degree of credit of a user.

However, immediately after a user signs up for a service, the use has no other users connected to the user on the service and the user has no trading result. Therefore, the user cannot acquire credence from other users and, as a result, the user may not be able to connect with an unacquainted user on the SNS or may be rejected to participate in trading.

Therefore, in the present disclosure, the result of evaluation indicating whether a driver drives gently is used as the degree of credence of the driver in a service (such as an SNS or C to C trading) that is not related to driving. Using the result of evaluation in this way makes it possible to acquire the degree of credence when the user has little or no usage result in the service.

One aspect of the present disclosure is an information processing device. The information processing device includes a storage unit and a control unit. The storage unit stores first information that indicates the behavior history of a user during driving of a vehicle in a first period. The control unit performs the driving evaluation of the user based on the first information for the first period and acquires a degree of credence, which indicates a degree of credit of the user in a predetermined service, based on the result of the driving evaluation of the user. The information processing device is, for example, a server. Note that the information processing device is not limited to a server but may be an in-vehicle device mounted on the vehicle. The control unit is, for example, a processor.

The first information that indicates the behavior history of a user during driving of a vehicle is, for example, the history information on predetermined events that occur while the user is driving. The predetermined events include, for example, the detection of the occurrence of a speed measurement cycle, sudden braking, sudden starting, sudden steering, and horn sounding and an event such as a behavior to give way to a pedestrian, a behavior to allow another vehicle to merge into traffic, and the like. In this case, the first information includes, for example, an event that occurs and the occurrence time of the event. When the occurrence of a speed measurement cycle is detected, the first information includes the speed and the speed measurement time. When the information processing device is a server, the first information may be sent from the vehicle to the server at a predetermined cycle. In the driving evaluation based on this first information, whether the user drives the vehicle gently is evaluated.

To perform the driving evaluation of the user, at least one of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic may be counted based on the first information for the first period and, then, the driving evaluation of the user may be performed based on this count. In this case, an adding point according to at least one of the cumulative time of traveling with a speed equal to or less than a legal speed, the number of times of behaviors to give way to a pedestrian, and the number of times of behaviors to allow another vehicle to merge into traffic may be acquired. In addition, a subtracting point according to at least one of the number of times of sudden braking operations, the number of times of sudden starting operations, the number of times of horn sounding operations, and the number of times of sudden steering operations may be acquired. The total value of the adding point and the subtracting point may be acquired as the result of the driving evaluation of the user.

According to one aspect of the present disclosure, even when a user has little or no usage result or has little or no personal connection with other users in a predetermined service, for example, when the user starts using the predetermined service, the degree of credence of the user may be acquired based on the result of the above-described driving evaluation indicating that the user constantly drives the vehicle gently.

In one aspect of the present disclosure, the control unit may acquire the degree of credence of the user in a predetermined service based on first credit information about the credit of the user and on the result of the driving evaluation of the user that is weighted more heavily than the first credit information. For example, when the predetermined service is an SNS, the first credit information may be the number of friends. For example, when the predetermined service is C to C trading, the first credit information may be the number of purchase and sales transactions and/or the average value of the evaluation of each transaction. For example, when the predetermined service is a car insurance service, the first credit information may be the history information on past accidents. For example, when the predetermined service is the issuance of a credit card, the first credit information may be the credit information on the user managed by the credit information agency.

As described above, the result of the driving evaluation of a user is one piece of information indicating whether the user is a credible person. Therefore, in the case where another piece of credit information, such as the first credit information described above, may also be used to acquire the degree of credence, the degree of credence reflecting that the user is a credible person can be acquired by giving more weight to the result of the driving evaluation of the user.

In one aspect of the present disclosure, the control unit may adjust the point of each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic based on a tendency of influence on the degree of credence of the user for each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic that are acquired from first information in a second period that is earlier than the first period. For example, machine learning may be used to adjust each point. The accuracy of the degree of credence obtained from the result of driving evaluation can be increased by adjusting each point based on the tendency of influence on the user's degree of credence acquired from actual past data. Increasing the accuracy of the degree of credence of a user means, for example, reducing the difference between the evaluation of the actual character of the user and the degree of credence obtained from the result of driving evaluation. Note that not only the point but also the weight may be adjusted.

In one aspect of the present disclosure, the control unit may perform the driving evaluation based on the first information as well as on the road situation information indicating the road congestion situation when the first information is acquired. A road congestion situation can affect the driver's psychological state. For example, when the road is congested, the driver feels stressed and loses his or her mental capacity, which may lead to rough driving that is unusual. A driver who can drive gently even in such a case tends to have a stable mental state and, in this case, others are likely to feel that the driver is a credible person. Therefore, driving evaluation with the road congestion situation in mind enhances the reliability of the degree of credence of a user.

In one aspect of the present disclosure, the control unit may send a notification to a user terminal associated with the user to notify about the degree of credence. Notifying the user, who is the driver of the vehicle, of the degree of credence acquired based on the result of the driving evaluation allows the user to objectively review his or her driving. In addition, making the user recognize that the result of driving evaluation is reflected on the degree of credence in a predetermined service allows the user to take care to drive safely.

An embodiment of the present invention will be described below with reference to the drawings. The configuration of the embodiment described below is an example, and the present invention is not limited to the configuration of this embodiment.

### First Embodiment

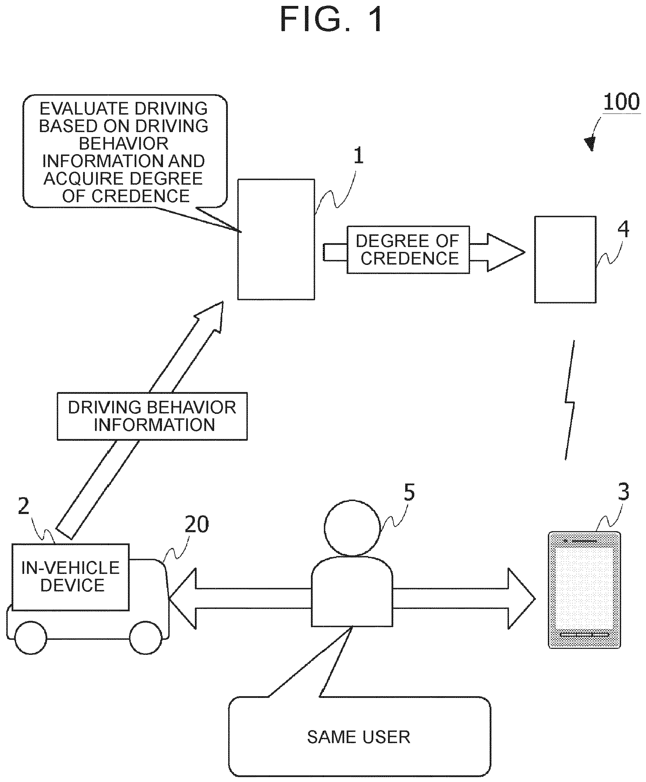

FIG. 1 is a diagram showing an example of a system configuration of a degree-of-credence acquisition system 100 according to a first embodiment. The degree-of-credence acquisition system 100 includes a center server 1 and an in-vehicle device 2. Although the degree-of-credence acquisition system 100 includes a plurality of in-vehicle devices 2, one in-vehicle device 2 is shown in FIG. 1 for convenience. The center server 1 can communicate, for example, with an SNS server 4. The SNS server 4 can communicate with a user terminal 3. The user terminal 3 is a terminal carried by the driver of the vehicle 20.

The in-vehicle device 2 is mounted on the vehicle 20 driven by a user 5. The in-vehicle device 2 can be wirelessly connected, for example, to a mobile phone network or a WiFi network and, via these access networks, to the Internet. The center server 1 is connected, for example, to a local area network (LAN) or the like and, via the LAN, to the Internet. The center server 1 and the in-vehicle device 2 can communicate with each other via the Internet.

The in-vehicle device 2 collects driving behavior information on the vehicle 20. The driving behavior information is the history information on predetermined events that occur while the user 5 is driving the vehicle 20. The predetermined events include, for example, the detection of sudden braking, sudden steering, sudden starting, horn sounding, and meandering driving. Furthermore, the predetermined events may include an event obtained from the recognition result of images captured by a camera, such as a behavior to give way to a pedestrian, to allow another vehicle to merge into the lane, and the like. Furthermore, the predetermined events may include the occurrence of a speed acquisition cycle. Note that the predetermined events are not limited to those given above. When the driving behavior information is accumulated, for example, for a predetermined period, the in-vehicle device 2 sends the driving behavior information for the predetermined period to the center server 1. The driving behavior information is an example of "first information".

For example, the user 5 accesses the SNS server 4 through the user terminal 3, newly signs up for the SNS, and sets the use of the degree of credence based on the driving evaluation by the degree-of-credence acquisition system 100. When the use of the degree of credence is set by the user 5, the SNS server 4 sends a degree-of-credence acquisition request to the center server 1. When the degree-of-credence acquisition request is received from the SNS server 4, the center server 1 refers to the driving behavior information on the user for a predetermined period to evaluate the driving of the user and, based on the result of the driving evaluation, acquires the degree of credence. The center server 1 sends the acquired degree of credence to the SNS server 4. As a result, in the SNS provided by the SNS server 4, the degree of credence acquired by the center server 1 as described above is used as one type of credit information on the user 5.

When the user 5 signs up for the SNS provided by the SNS server 4, there are a few other users connected on the SNS. However, the degree of credence acquired based on the result of the driving evaluation as described above makes it possible to show on the SNS that the degree of credence of the user 5 is guaranteed. Note that not only the SNS server 4 but also any external server can acquire the degree of credence based on the driving evaluation from the center server 1.

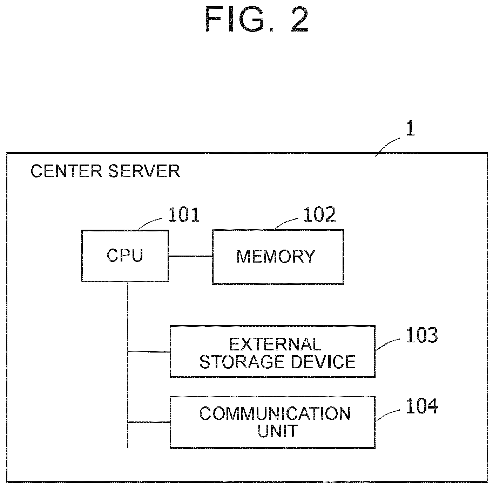

FIG. 2 is a diagram showing an example of a hardware configuration of the center server 1. The center server 1 includes a central processing unit (CPU) 101, a memory 102, an external storage device 103, and a communication unit 104 as the hardware configuration. The memory 102 and the external storage device 103 are computer-readable recording media. The center server 1 is an example of an "information processing device".

The external storage device 103 stores various programs and data used by the CPU 101 when executing each program. The external storage device 103 is, for example, an erasable programmable ROM (EPROM) or a hard disk drive. The programs stored in the external storage device 103 include, for example, the operating system (OS), the degree of credence acquisition program, and various other application programs. The degree of credence acquisition program is a program for acquiring the degree of credence based on the driving evaluation of the user 5.

The memory 102 is a storage device used by the CPU 101 as a storage area into which a program is loaded from the external storage device 103. The memory 102 is also used by the CPU 101 as a work area or as a buffer. The memory 102 includes, for example, a semiconductor memory such as a read only memory (ROM) and a random access memory (RAM).

The CPU 101 performs various types of processing by loading the OS and various application programs from the external storage device 103 into the memory 102 for execution. One or more CPUs 101 may be provided. The CPU 101 is an example of a "control unit" of the "information processing device".

The communication unit 104 is an interface for sending and receiving information to and from the network. The communication unit 104 may be an interface for connection to a wired network or an interface for connection to a wireless network. The communication unit 104 is, for example, a network interface card (NIC), a wireless circuit, or the like. The hardware configuration of the center server 1 is not limited to that shown in FIG. 2.

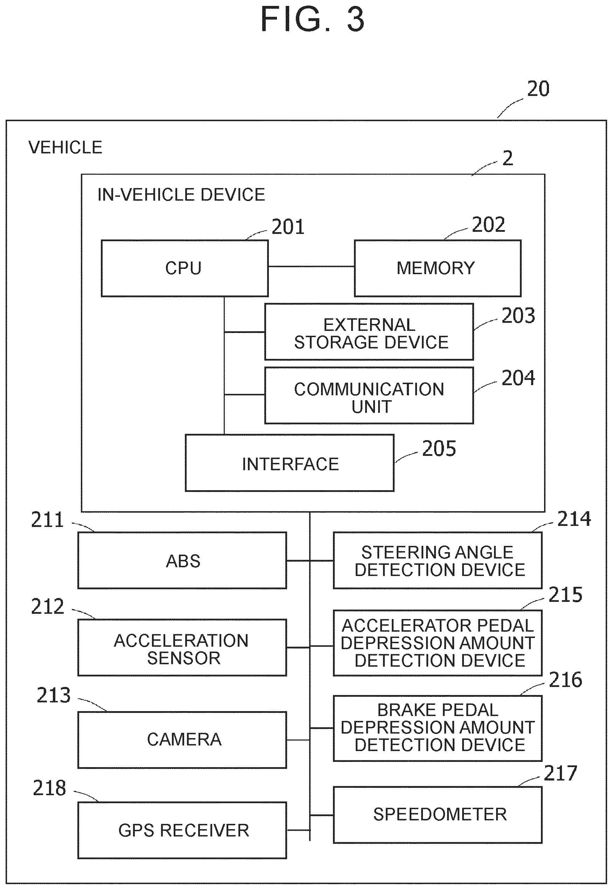

FIG. 3 is a diagram showing an example of a hardware configuration of the vehicle 20. Note that, in FIG. 3, the hardware configuration related to the processing of the degree-of-credence acquisition system 100 is extracted from the hardware configuration of the vehicle 20 for illustration purposes. As a hardware configuration related to the processing of the degree-of-credence acquisition system 100, the vehicle 20 includes the in-vehicle device 2, an anti-lock braking system (ABS) 211, an acceleration sensor 212, a camera 213, a steering angle detection device 214, an accelerator pedal depression amount detection device 215, a brake pedal depression amount detection device 216, a speedometer 217, and a GPS receiver 218.

The ABS 211 is a system that prevents the tires from locking when sudden braking is applied. The ABS 211 maintains stability in the traveling direction of the vehicle when sudden braking is applied to increase the possibility of avoiding obstacles by operating the steering wheel. In the first embodiment, the ABS 211 may be used, for example, for detecting sudden braking.

The acceleration sensor 212 measures acceleration applied to the vehicle 20. The detection value of the acceleration sensor 212 may be used, for example, for detecting sudden braking and sudden starting. The camera 213 is installed in such a way that it is pointed toward the outside of the vehicle 20 for capturing, for example, an image outside and ahead of the vehicle 20. The images captured by the camera 213 may be used, for example, for detecting a behavior to give way to a pedestrian, to allow another vehicle to merge into traffic, or the like.

The steering angle detection device 214 detects the steering angle that is an angle at which the driver turns the steering wheel. The steering angle may be used, for example, for detecting sudden steering. The accelerator pedal depression amount detection device 215 detects the accelerator pedal depression amount depressed by the driver. The accelerator pedal depression amount may be used, for example, for detecting sudden starting. The brake pedal depression amount detection device 216 detects the brake pedal depression amount depressed by the driver. The brake pedal depression amount may be used, for example, for detecting sudden braking. Instead of the accelerator pedal depression amount detection device 215, an accelerator pedal operation amount detection device that detects the accelerator pedal operation amount may be used, and the accelerator pedal operation amount may be used for detecting sudden starting. Instead of the brake pedal depression amount detection device 216, a brake pedal operation amount detection device that detects the brake pedal operation amount may be used, and the brake pedal operation amount may be used for detecting sudden braking. The speedometer 217 detects the speed of the vehicle 20.

The Global Positioning System (GPS) receiver 218 receives the radio waves of time signals from a plurality of artificial satellites (global positioning satellites), which orbit the earth, for calculating latitude and longitude from the detection signals for use as the position information.

The in-vehicle device 2 includes a CPU 201, a memory 202, an external storage device 203, a communication unit 204, and an interface 205 as the hardware configuration. The memory 202 and the external storage device 203 are computer-readable recording media.

The external storage device 203 stores various programs and data that is used by the CPU 101 when executing programs. The external storage device 203 is, for example, an EPROM or a hard disk drive. The programs stored in the external storage device 203 include, for example, the operating system (OS), a driving behavior information sending program, and various other application programs. The driving behavior information sending program is a program for sending the driving behavior information to the center server 1.

The memory 202 is a storage device used by the CPU 201 as a storage area into which a program is loaded from the external storage device 203. The memory 202 is also used by the CPU 201 as a work area or as a buffer. The memory 202 includes, for example, a semiconductor memory such as a ROM and a RAM.

The CPU 201 performs various types of processing by loading the OS and various application programs from the external storage device 203 into the memory 202 for execution. One or more CPUs 201 may be provided.

The communication unit 204 is an interface though which information is sent to or received from a network. The communication unit 204 is an interface for connection to a wireless network. The communication unit 204 performs communication based on the 5th Generation (5G), Long Term Evolution (LTE), or 3rd Generation (3G) mobile communication system or based on a wireless communication standard such as WiFi.

The interface 205 connects hardware components other than the in-vehicle device 2 in the vehicle 20 to the in-vehicle device 2. To the interface 205, the ABS 211, the acceleration sensor 212, the camera 213, the steering angle detection device 214, the accelerator pedal depression amount detection device 215, the brake pedal depression amount detection device 216, the speedometer 217, and the GPS receiver 218 are connected. The hardware configuration of the vehicle 20 is not limited to that shown in FIG 3.

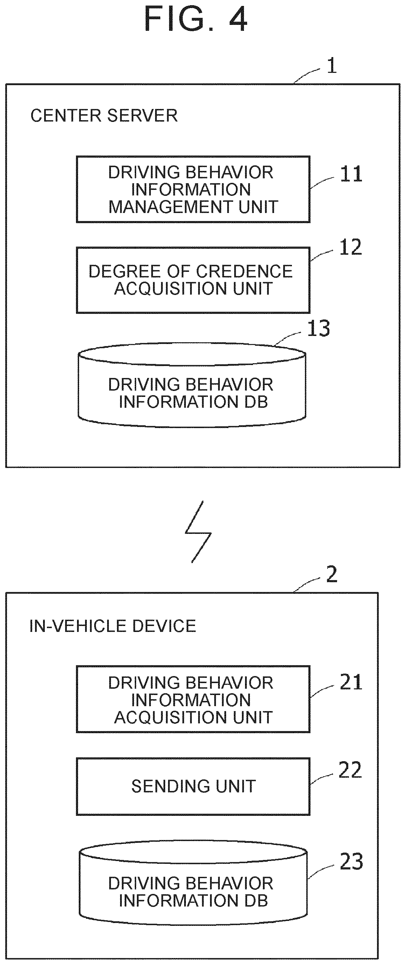

FIG. 4 is a diagram showing an example of a functional configuration of the center server 1 and the in-vehicle device 2. The in-vehicle device 2 includes a driving behavior information acquisition unit 21, a sending unit 22, and a driving behavior information database (DB) 23 as the functional components. These functional components are, for example, functional components implemented when the CPU 201 of the in-vehicle device 2 executes the driving behavior information sending program.

The driving behavior information acquisition unit 21 generates driving behavior information. More specifically, when the occurrence of a predetermined event is detected, the driving behavior information acquisition unit 21 generates driving behavior information. The predetermined events include, for example, the occurrence of a speed measurement cycle, sudden braking, sudden starting, sudden steering, horn sounding, a behavior to give way to a pedestrian, a behavior to allow another vehicle to merge into traffic, or the like.

The driving behavior information acquisition unit 21 acquires, through the interface 205, the detection values detected by the acceleration sensor 212, the camera 213, the steering angle detection device 214, the accelerator pedal depression amount detection device 215, the brake pedal depression amount detection device 216, and the speedometer 217 at a predetermined cycle. The driving behavior information acquisition unit 21 detects the occurrence of a predetermined event from these detection values. The cycle of acquiring these values may be different from, or the same as, the cycle of acquiring the values from other various sensors.

Sudden braking may be detected, for example, when the amount of change in the brake pedal depression amount is equal to or greater than a predetermined threshold value, when the value of the acceleration sensor 212 in the direction opposite to the traveling direction of the vehicle 20 is equal to or greater than a threshold value, and/or when sudden braking is detected by the ABS 211. Sudden steering may be detected, for example, when the amount of change in the steering angle is equal to or greater than a predetermined threshold value and/or when the value of the acceleration sensor 212 applied in a predetermined direction is equal to or greater than a threshold value. Sudden starting may be detected by, for example, when the amount of change in the accelerator pedal depression amount is equal to or greater than a predetermined threshold value and/or when the value of the acceleration sensor 212 in the traveling direction of the vehicle 20 is equal to or greater than a threshold value. Horn sounding may be detected, for example, when the depression signal of the horn is received. A behavior to give way to a pedestrian and a behavior to allow another vehicle to merge into traffic are detected, for example, by monitoring the recognition result of the images captured by the camera 213.

When the occurrence of any of the predetermined events described above is detected, the driving behavior information acquisition unit 21 generates the driving behavior information. The driving behavior information includes, for example, the identification information on the user, identification information on the vehicle 20, type of event, and event occurrence time. The type of event includes sudden braking, sudden starting, sudden steering, horn sounding, a behavior to give way to a pedestrian, and a behavior to allow another vehicle to merge into traffic.

When the occurrence of a speed measurement cycle is detected, the driving behavior information acquisition unit 21 acquires the speed from the speedometer 217 and the position information from the GPS receiver 218 and generates the driving behavior information. The driving behavior information generated at this time includes the identification information on the user, identification information on the vehicle 20, "speed measurement" as the type of event, the time, the value of speed, and the position information. The driving behavior information acquisition unit 21 stores the generated driving behavior information in the driving behavior information DB 23.

When generating the driving behavior information, the driving behavior information acquisition unit 21 may check the traffic congestion information. When a section of the road on which the vehicle is currently driving is congested at this time, the driving behavior information acquisition unit 21 may include, in the driving behavior information, the road situation indicating that the road is congested. That is, the driving behavior information includes, for example, the identification information on the user, the identification information on the vehicle 20, the type of event, the time when an event occurred, the speed (only in the case of speed measurement), and the road situation. The traffic congestion information is acquired from the road traffic information communication system (VICS (registered trademark)), for example, through a car navigation system provided in the vehicle 20.

At a predetermined cycle, the sending unit 22 reads one cycle of driving behavior information on that predetermined cycle from the driving behavior information DB 23 and sends it to the center server 1. The cycle at which the driving behavior information stored in the driving behavior information DB 23 is sent to the center server 1 may be hourly, daily, or weekly.

The driving behavior information DB 23 stores the driving behavior information. The driving behavior information DB 23 is created, for example, in the storage area of the external storage device 203 of the in-vehicle device 2.

Next, the center server 1 includes a driving behavior information management unit 11, a degree of credence acquisition unit 12, and a driving behavior information DB 13 as the functional components. These functional components are implemented, for example, when the CPU 101 of the center server 1 executes the degree of credence acquisition program in the memory 102.

The driving behavior information management unit 11 manages the driving behavior information on each user. More specifically, the driving behavior information management unit 11 receives the driving behavior information, sent from the in-vehicle device 2, and stores the received driving behavior information in the driving behavior information DB 13. In addition, in response to a request from the degree of credence acquisition unit 12, the driving behavior information management unit 11 reads, from the driving behavior information DB 13, the driving behavior information on a specified user and for a predetermined period. Furthermore, the driving behavior information management unit 11 may delete the driving behavior information that has been stored, for example, for a predetermined time or longer from the driving behavior information DB 13.

The driving behavior information DB 13 stores the driving behavior information on each user. The driving behavior information DB 13 is created, for example, in the storage area in the external storage device 103 of the center server 1.

The degree of credence acquisition unit 12 receives a degree-of-credence acquisition request, for example, from an external server such as the SNS server 4. When a degree-of-credence acquisition request is received, the degree of credence acquisition unit 12 also receives the identification information on the user whose degree of credence is to be acquired and the identification information on the vehicle 20. The degree of credence acquisition unit 12 requests the driving behavior information management unit 11 to read the driving behavior information on the specified user and for a predetermined period and acquires the driving behavior information, which has been read, from the driving behavior information management unit 11. The period for which the driving behavior information is acquired may be freely set, for example, to a period in the range from the latest one month to the latest one year. The period for which the driving behavior information is acquired is an example of the "first period".

For example, from the driving behavior information on a specified user for a predetermined period, the degree of credence acquisition unit 12 acquires the cumulative value of the time of traveling with a speed equal to or less than the legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic. Based on the information acquired in this way, the degree of credence acquisition unit 12 performs driving evaluation.

Each of the number of times of sudden braking operations, the number of times of sudden starting operations, the number of times of sudden steering operations, the number of times of horn sounding operations, the number of time of behaviors to give way to a pedestrian, and the number of times of behaviors to allow another vehicle to merge into traffic is acquired, for example, as the count of the respective type of event included in the driving behavior information.

The cumulative value of time of traveling with a speed equal to or less than the legal speed is acquired, for example, based on the driving behavior information where the type of event is speed measurement. More specifically, for each piece of driving behavior information where the type of event is speed measurement, the degree of credence acquisition unit 12 checks the position information to identify the traveling road indicated in the driving behavior information, acquires the legal speed on the road, and determines whether the speed included in the driving behavior information is equal to or less than the legal speed. The degree of credence acquisition unit 12 acquires the cumulative value of the time of traveling with a speed equal to or less than the legal speed by multiplying the count of pieces of driving behavior information where the speed is equal to or less than the legal speed by the time of one speed measurement cycle.

Instead of the degree of credence acquisition unit 12 of the center server 1, the in-vehicle device 2 may check the position information to identify the traveling road indicated in the driving behavior information, acquire the legal speed on the road, and determine whether the speed included in the driving behavior information is equal to or less than the legal speed. In this case, the driving behavior information may include the identification information on the user, the identification information on the vehicle 20, "speed measurement" as the type of event, the time, and the information indicating whether the speed is equal to or less than legal speed (for example, a flag). The degree of credence acquisition unit 12 may acquire the cumulative value of the time of traveling with a speed equal to or less than the legal speed by multiplying the count of pieces of driving behavior information where the speed is equal to or less than the legal speed by the time of one speed measurement cycle.

The driving evaluation method is not limited to the predetermined method, and any known method may be used. For example, the following method is available as an example of the driving evaluation method.

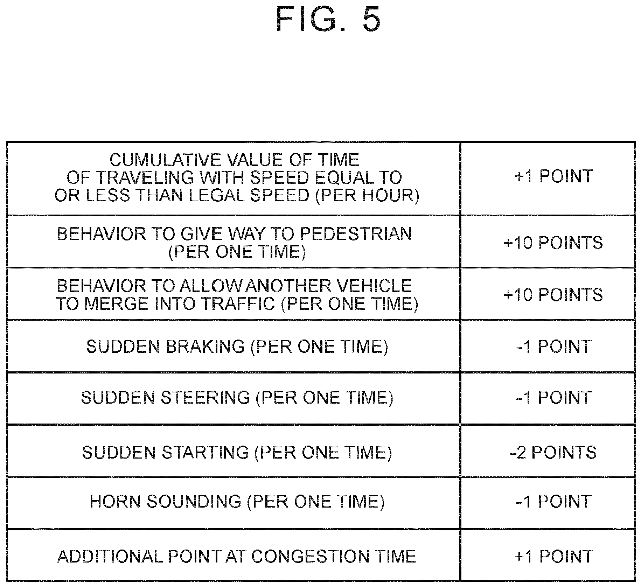

FIG. 5 is a diagram showing an example of the definition of the number of points used for driving evaluation. In the example shown in FIG. 5, the number of points is defined as follows. One point is added per hour of the cumulative value of the time of traveling with a speed equal to or less than the legal speed. Ten points are added per one time of the behavior to give way to a pedestrian. Ten points are added per one time of the behavior to allow another vehicle to merge into traffic. One point is subtracted per one time of sudden braking. One point is subtracted per one time of sudden steering. Two points are subtracted per one time of sudden starting. One point is subtracted per one time of horn sounding.

When the traffic is congested, an additional one point is added to each adding point of items other than the cumulative value of the time of traveling with a speed equal to or less than legal speed. In the example shown in FIG. 5, an adding point is defined for the behavior to give way to a pedestrian and the behavior to allow another vehicle to merge into traffic. That is, when the driving behavior information includes the information indicating that the road is congested as the road situation information and when the type of event included in the driving behavior information is the behavior to give way to a pedestrian or to the behavior to allow another vehicle to merge into traffic, eleven points are added for each of these behaviors. The driving evaluation is acquired as the sum of points of the items.

Note that the definition of driving evaluation items and the point of each item are not limited to the example shown in FIG. 5. The point of each item is thought of as the weight given to the item. In addition, the point of each item is defined for evaluating the driving of the user for the period of a specific length and, therefore, the point may be changed as necessary according to the length of the evaluation period.

The driving evaluation method based on the driving behavior information is not limited to the method using the points shown in FIG. 5. For example, a function or a machine learning model may be used for driving evaluation. In this case, the function or the machine learning model receives an input collected for a predetermined period. This input includes, for example, the cumulative value of the time of traveling with a speed equal to or less than legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic. In response to this input, the function or the machine learning model outputs the driving evaluation result.

Returning to FIG. 4, the degree of credence acquisition unit 12 acquires the degree of credence based on the result of driving evaluation. For example, when the driving evaluation is acquired as the total value of the points shown in FIG. 5, the total value of the points of the driving evaluation may be used directly as the degree of credence. Furthermore, the degree of credence may be acquired in a form according to the request of a requesting user. For example, the degree of credence may be determined incrementally according to the points of driving evaluation. More specifically, the driving evaluation of 0 to 100 points is degree of credence C, 101 to 300 points is degree of credence B, and 301 points or more is degree of credence A.

The degree of credence acquisition unit 12 outputs the acquired degree of credence to the SNS server 4 from which the request was received. The degree of credence acquisition unit 12 may also send a notification about the degree of credence to the user terminal 3 of the requesting user. The user can also confirm the degree of credence on a predetermined web page in the SNS provided by the SNS server 4.

The functional components of the center server 1 and the in-vehicle device 2 may also be implemented by hardware such as a field-programmable gate array (FPGA).

### Processing Flow

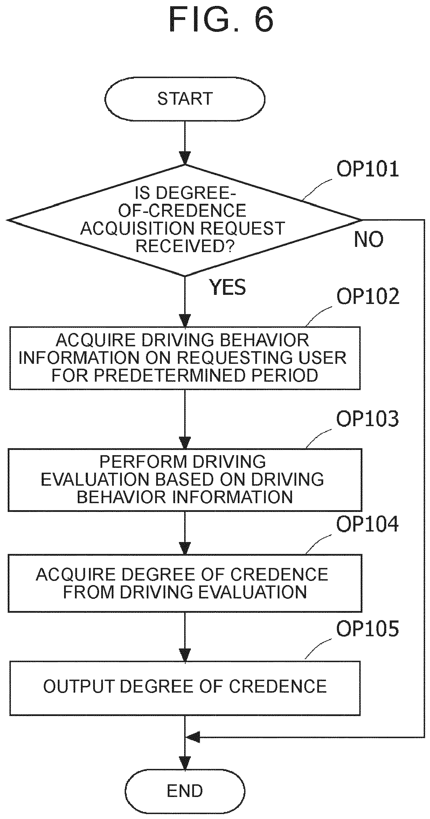

FIG. 6 is an example of the flowchart of the degree of credence acquisition processing performed by the center server 1. The processing shown in FIG. 6 is repeatedly performed, for example, at a predetermined cycle. Note that, though the processing shown in FIG. 6 is performed primarily by the CPU 101 of the center server 1, the processing is described below with emphasis on the functional components for convenience sake. The same applies to the flowcharts given below.

In OP101, the degree of credence acquisition unit 12 determines whether a degree-of-credence acquisition request is received from an external server. A degree-of-credence acquisition request is sent from the SNS server 4 to the center server 1, for example, when the user (driver) of the vehicle 20 signs up for the SNS server 4 through the user terminal 3 and, at that time, the user selects to use the degree of credence that is determined based on the driving evaluation of the vehicle 20. In this case, the identification information on the user (driver) of the vehicle 20 and the identification information on the vehicle 20 are sent from the user terminal 3 to the SNS server 4. The SNS server 4 sends the identification information on the user of the vehicle 20 and the identification information on the vehicle 20, together with the degree-of-credence acquisition request, to the center server 1. Also when an external server other than the SNS server 4 sends a degree-of-credence acquisition request to the center server 1, the degree-of-credence acquisition request is sent to the center server 1 together with the identification information on the user of the vehicle 20 and the identification information on the vehicle 20.

When a degree-of-credence acquisition request is received (OP101: YES), the processing proceeds to OP102. When a degree-of-credence acquisition request is not received (OP101: NO), the processing in FIG. 6 is terminated.

In OP102, the degree of credence acquisition unit 12 acquires the driving behavior information on the requesting user for a predetermined period through the driving behavior information management unit 11. In OP103, the degree of credence acquisition unit 12 analyzes the driving behavior information acquired in OP102 and performs driving evaluation. In OP104, the degree of credence acquisition unit 12 acquires the degree of credence from the result of the driving evaluation. In OP105, the degree of credence acquisition unit 12 sends the degree of credence of the requesting user to the request-sending server. The degree of credence acquisition unit 12 may also send the notification about the degree of credence to the user terminal 3 of the requesting user. After that, the processing shown in FIG. 6 is terminated.

### Operation and Effect of First Embodiment

In the first embodiment, the degree of credence in other services is acquired from the evaluation of the daily driving of the vehicle 20. As a result, even if a user has no a usage result that is referenced as an index of the degree of credence in the service, the degree of credence acquired from the driving evaluation may be used to show that the user is a credible user.

In addition, the degree of credence acquired from the driving evaluation, if fed back to the user, gives the user a chance to objectively review his or her driving, leading to more careful and safe driving. Furthermore, since the daily driving evaluation is used as the degree of credence in other services, the user becomes more concerned about safe driving.

### Modification

In the first embodiment, when a degree-of-credence acquisition request is received from an external server, the degree of credence acquired based on the result of driving evaluation is returned. On the other hand, in this modification, when a degree-of-credence acquisition request is received from an external server, not only the result of driving evaluation but also another piece of credit information specified, for example, by the external server is used to acquire the degree of credence. Another piece of credit information in this case includes, for example, the number of friends in the case of an SNS service, the number of trading operations and/or the evaluation of trading in the case of C to C trading, the credit information in the case of the financial service, and the accident history information in the case of the car insurance service. The configuration of the system and the hardware configuration and the functional configuration of the center server 1 and the in-vehicle device 2 in this modification are similar to those of the first embodiment.

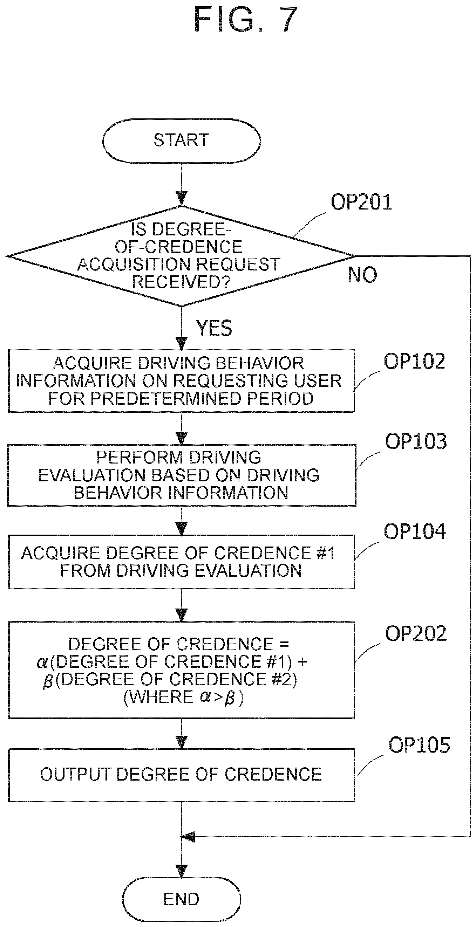

FIG. 7 is an example of the flowchart of the degree of credence acquisition processing according to this modification. For the processing common to the first embodiment, the same reference numeral in the flowchart in FIG. 6 is given to the corresponding processing.

In OP201, the degree of credence acquisition unit 12 determines whether a degree-of-credence acquisition request is received from an external server. Along with the degree-of-credence acquisition request, the identification information on the user of the vehicle 20, the identification information on the vehicle 20, and the external-server-dependent credit information are received from the external server. The external-server-dependent credit information may be acquired by the external server or by the degree of credence acquisition unit 12. Since the external-server-dependent credit information cannot always be used with no change, it is converted to the degree of credence using the predetermined conversion method so that the converted degree of credence can be used together with the degree of credence that is acquired based on the result of driving evaluation. In the description below, the degree of credence converted from the external-server-dependent credit information is referred to as degree of credence #2.

When a degree-of-credence acquisition request is received (OP201: YES), the processing proceeds to OP102. When a degree-of-credence acquisition request is not received (OP201: NO), the processing shown in FIG. 7 is terminated.

The degree of credence acquisition unit 12 acquires the driving behavior information on the requesting user for a predetermined period (OP102), performs driving evaluation (OP103), and acquires the degree of credence #1 from the result of the driving evaluation (OP104).

In OP202, the degree of credence acquisition unit 12 acquires the degree of credence by calculating the sum of the value obtained by multiplying the degree of credence #1 by α and the value obtained by multiplying the degree of credence #2 by β, where α>β.

In OP105, the degree of credence acquisition unit 12 sends the degree of credence of the requesting user to the request-sending server. The degree of credence acquisition unit 12 may also send the notification about the degree of credence to the user terminal 3 of the requesting user. After that, the processing shown in FIG. 7 is terminated.

According to this modification, the degree of credence can be acquired using the credit information other than that acquired from the driving evaluation. As a result, the degree of credence can be determined by the credit information (degree of credence #2) associated with the service and the degree of credence #1 based on the driving evaluation that is not related to the service. This means that the modification gives the degree of credence evaluated comprehensively from a plurality of points of view. Another advantage of this modification is that, even if a trading partner has intentionally given a bad rating, for example, in C to C trading, the degree of credence based on the result of driving evaluation has a greater weight in the calculation of the degree of credence and, therefore, the impact of the low evaluation in the trading can be kept low.

### Other Embodiment

The above embodiment is merely an example, and the present invention may be implemented with appropriate modifications within a range not departing from the spirit thereof.

In the first embodiment, the center server 1 performs driving evaluation and acquires the degree of credence from the result of driving evaluation. Instead of this, the in-vehicle device 2 may perform this processing. In this case, the user terminal 3 and the in-vehicle device 2 may communicate with each other through short-range wireless communication, such as Bluetooth (registered trademark) Low Energy (BLE), to send a degree-of-credence acquisition request from the user terminal 3 directly to in-vehicle device 2. When the in-vehicle device 2 performs driving evaluation and the acquisition of degree of credence, the in-vehicle device 2 is an example of an "information processing device" and the CPU 201 is an example of a "control unit".

When the driving behavior information on each user is accumulated for a predetermined period or longer, the tendency of influence on the degree of credence of each user may become apparent for each type of event. For example, since sudden braking may occur due to an external factor that occurs for example, when a pedestrian jumps into a road, the tendency becomes apparent that the number of sudden braking operations has a small influence on the degree of credence. Such a tendency may be acquired, for example, by analyzing the driving behavior information using a machine learning model and, based on the acquired tendency, the point of each item shown in FIG. 5 may be adjusted. This increases the credibility of the degree of credence.

The processing and means described in the present disclosure can be freely combined for implementation as long as there is no technical contradiction.

The processing described as being performed by one device may be shared and performed by a plurality of devices. Conversely, the processing described as being performed by different devices may be performed by one device. In the computer system, it is possible to flexibly change the hardware configuration (server configuration) to implement each function.

The present invention can also be implemented by supplying a computer with a computer program that implements the functions described in the above embodiment and by causing one or more processors of the computer to read and execute the program. Such a computer program may be provided to the computer by a non-transitory computer-readable storage medium that can be connected to the system bus of the computer or may be provided to the computer via a network. The non-transitory computer-readable storage medium includes, for example, any type of disk, such as a magnetic disk (floppy (registered trademark) disk, hard disk drive (HDD), etc.) and an optical disc (CD-ROM, DVD disc, Blu-ray disc, etc.), and any type of medium suitable for storing electronic instructions such as a read only memory (ROM), a random access memory (RAM), an EPROM, an EEPROM, a magnetic card, a flash memory, and an optical card.

## Claims

1. An information processing device (2) comprising:
a storage unit (23) configured to store first information, the first information indicating a behavior history of a user (5) during driving of a vehicle (20) in a first period; and
a control unit (201) configured to perform a driving evaluation of the user based on the first information for the first period and configured to acquire a degree of credence based on a result of the driving evaluation of the user (5), the degree of credence indicating a degree of credit of the user (5) in a predetermined service.

2. The information processing device (2) according to claim 1, wherein the control unit (201) is configured to acquire the degree of credence of the user (5) in the predetermined service based on first credit information about credit of the user and on the result of the driving evaluation of the user that is weighted more heavily than the first credit information.

3. The information processing device (2) according to claim 1 or 2, wherein the control unit (201) is configured to count at least one of a cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic based on the first information for the first period and is configured to perform the driving evaluation of the user based on the count.

4. The information processing device (2) according to claim 3, wherein the control unit (201) is configured to acquire an adding point according to at least one of the cumulative time of traveling with a speed equal to or less than a legal speed, the number of times of behaviors to give way to a pedestrian, and the number of times of behaviors to allow another vehicle to merge into traffic and to acquire a subtracting point according to at least one of the number of times of sudden braking operations, the number of times of sudden starting operations, the number of times of sudden steering operations, and the number of times of horn sounding operations and is configured to acquire a total value of the adding point and the subtracting point as the result of the driving evaluation of the user (5).

5. The information processing device (2) according to claim 4, wherein the control unit (201) is configured to adjust the point of each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic based on a tendency of influence on the degree of credence of the user for each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic that are acquired from first information in a second period that is earlier than the first period.

6. The information processing device (2) according to any one of claims 1 to 5, wherein the control unit (201) is configured to perform the driving evaluation based on the first information as well as on road situation information indicating a road situation when the first information is acquired.

7. The information processing device (2) according to any one of claims 1 to 6, wherein the predetermined service is a social network service.

8. The information processing device (2) according to any one of claims 1 to 7, wherein the control unit (201) is further configured to receive the first information from the vehicle (20) at a predetermined cycle and to store the received first information in the storage unit (23).

9. The information processing device (2) according to any one of claims 1 to 8, wherein the control unit (201) is configured to send a notification about the degree of credence to a user terminal (3) associated with the user (5).

10. An information processing method comprising:
storing first information in a storage unit (23), the first information indicating a behavior history of a user (5) during driving of a vehicle (20) in a first period;
performing a driving evaluation of the user based on the first information for the first period; and
acquiring a degree of credence based on a result of the driving evaluation of the user (5), the degree of credence indicating a degree of credit of the user in a predetermined service.

11. The information processing method according to claim 10, the information processing method further comprising acquiring the degree of credence of the user (5) in the predetermined service based on first credit information about credit of the user (5) and on the result of the driving evaluation of the user (5) that is weighted more heavily than the first credit information.

12. The information processing method according to claim 10 or 11, the information processing method further comprising:
counting at least one of a cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic based on the first information for the first period; and
performing the driving evaluation of the user (5) based on the count.

13. The information processing method according to claim 12, the information processing method further comprising:
acquiring an adding point according to at least one of the cumulative time of traveling with a speed equal to or less than a legal speed, the number of times of behaviors to give way to a pedestrian, and the number of times of behaviors to allow another vehicle to merge into traffic;
acquiring a subtracting point according to at least one of the number of times of sudden braking operations, the number of times of sudden starting operations, the number of times of sudden steering operations, and the number of times of horn sounding operations; and
acquiring a total value of the adding point and the subtracting point as the result of the driving evaluation of the user (5).

14. The information processing method according to claim 13, the information processing method further comprising adjusting the point of each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic based on a tendency of influence on the degree of credence of the user for each of the cumulative time of traveling with a speed equal to or less than a legal speed, the number of times of sudden braking operations, the number of times of sudden starting operations, the number of times of sudden steering operations, the number of times of horn sounding operations, the number of times of behaviors to give way to a pedestrian, and the number of times of behaviors to allow another vehicle to merge into traffic that are acquired from first information in a second period that is earlier than the first period.

15. The information processing method according to any one of claims 10 to 14, the information processing method further comprising performing the driving evaluation based on the first information as well as on road situation information indicating a road situation when the first information is acquired.

16. The information processing method according to any one of claims 10 to 15, wherein the predetermined service is a social network service.

17. The information processing method according to any one of claims 10 to 16, the information processing method further comprising:
receiving the first information from the vehicle (20) at a predetermined cycle; and
storing the received first information in the storage unit (23).

18. The information processing method according to any one of claims 10 to 17, the information processing method further comprising sending a notification about the degree of credence to a user terminal (3) associated with the user (5).

19. A non-transitory storage medium storing a program that causes a computer to execute the information processing method according to any one of claims 10 to 18.

20. A non-transitory storage medium storing a program that causes a computer mounted on a vehicle (20) to:
acquire first information for use in performing a driving evaluation, a result of which is used to acquire a degree of credence, the degree of credence indicating a degree of credit of a user who drives the vehicle (20) and who uses a predetermined service, the first information indicating a behavior history of the user during driving of the vehicle (20); and
send the first information for a predetermined period to a predetermined server.
